(19) Europäisches Patentamt
European Patent Office
Office européen des brevets

(11) EP 4 347 734 B1

(12) EUROPEAN PATENT SPECIFICATION

(45) Date of publication and mention of the grant of the patent:
**29.01.2025 Bulletin 2025/05**

(21) Application number: **22729121.8**

(22) Date of filing: **12.05.2022**

(51) International Patent Classification (IPC):
***C09D 183/04*** *(2006.01)*

(52) Cooperative Patent Classification (CPC):
(C-Sets available)
**C08G 77/045** (Cont.)

(86) International application number:
**PCT/EP2022/062894**

(87) International publication number:
**WO 2022/248238 (01.12.2022 Gazette 2022/48)**

# (54) ENVIRONMENTALLY FRIENDLY COMPOSITION FOR TREATING MINERAL SUBSTRATES

UMWELTFREUNDLICHE ZUSAMMENSETZUNG ZUR BEHANDLUNG VON MINERALISCHEN SUBSTRATEN

COMPOSITION ÉCOLOGIQUE POUR LE TRAITEMENT DE SUBSTRATS MINÉRAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.05.2021 EP 21176149**

(43) Date of publication of application:
**10.04.2024 Bulletin 2024/15**

(73) Proprietor: **Evonik Operations GmbH**
**45128 Essen (DE)**

(72) Inventors:
- **MARTENS-KRUCK, Susanne Christine**
  **79541 Lörrach (DE)**
- **LJESIC, Spomenko**
  **79618 Rheinfelden (DE)**
- **GÜZELSAHIN, Mustafa**
  **79541 Lörrach (DE)**
- **ZEISEL, Steffen**
  **64407 Fränkisch-Crumbach (DE)**

(74) Representative: **Evonik Patent Association**
**c/o Evonik Industries AG**
**IP Management**
**Postcode 84/339**
**Rodenbacher Chaussee 4**
**63457 Hanau (DE)**

(56) References cited:
**WO-A1-2008/134243** **US-A- 5 695 551**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/5419, C08L 83/04;**
**C08K 5/5419, C09D 183/04**

## Description

The present invention relates to a dispersion for treating a surface of a substrate, especially of a surface of a mineral substrate, a method of preparing said dispersion, a method for treating a surface of a substrate and a substrates obtained therewith.

## BACKGROUND OF THE INVENTION

Alkyl silanes and siloxanes have been used to treat surfaces for a long time in the art. However, the use of pure silanes or siloxanes is often limited due to high VOC (volatile organic compounds) liberation during treatment and limited shelf-life of such products. To lower the amount of VOC liberation, US 5 225 510 A proposes the use of a hydrolysate / condensate of alkyl silanes as treatment for masonry. However, the disclosed products lack sufficient storage stability as the products are still reactive and therefore, properties of treated surfaces will differ depending on the age of the product. This, however, is not acceptable as customers desire constant and reliable properties of the treated surfaces.

Another attempt to improve the surface of steel-reinforced concrete is discussed in EP 3 072 858 using alkyl silanes in combination with amines. Amines, however, are catalysts for the condensation of alkyl silanes and again, the properties of treated surfaces are dependent on the age of the product and further, many amines are toxic and/or pose a danger to the environment.

Aqueous dispersions of alkoxysilane and alkoxysiloxanes, the preparation and use thereof are described in a variety of publications (see e.g. WO 2006/081891 A1 and WO 2006/081892 A1). Such dispersions are used *inter alia* for providing hydrophobic effects on mineral surfaces used in the building industry. These dispersions typically make use of n-octyltriethoxysilane (also referred to as OCTEO in the art) or an alkoxy derivative thereof to allow for sufficiently hydrophobic and long-lasting effects to be obtained. However, *n*-octyltriethoxysilane was recently found to be toxic to aquatic organisms and will be reclassified accordingly. The use of such compound or composition poses a significant threat to aquatic organisms.

In CN 107556050, a paste using *inter alia* cyclic siloxanes based on OCTEO is employed to treat concrete surfaces. Cyclic siloxanes are well-known for their toxicity and are to be avoided.

Although there are various attempts described in the art using silanes and compounds derived therefrom, none to date offers a solution for rendering mineral substrates hydrophobic without using harmful substances such as OCTEO or amines. As mineral substrates are typically used outside, the exposure of such harmful substances cannot effectively be prevented. Ecological damages such as pollution of subterranean water can be result thereof.

Document WO 2008/134243 A1 discloses in example 1 a composition used for the same purpose as the present invention, comprising n-octylsilsesquioxane and a phenyl siloxane. In the description n-butyl and isobutyltriethoxysilane are mentioned as alternatives.

## OBJECTIVE OF THE INVENTION

It is therefore the objective of the present invention to overcome the shortcomings of the prior art. It is a further objective of the present invention to provide a composition for rendering mineral surfaces hydrophobic. Another object underlying the present invention is to provide an environmentally friendly composition which does not require the use of OCTEO (or condensates derived therefrom).

## SUMMARY OF THE INVENTION

These objectives are solved by using a dispersion for treating a surface of a (mineral) substrate according to the invention comprising

A) at least one butyl silane selected from the group consisting of *iso*-butyltrialkoxysilane and *n*-butyltrialkoxysilane;
B) at least one silane-based compound comprising at least two building blocks represented by formula (P)

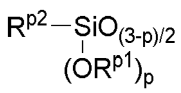

(P)

wherein

$R^{p1}$ is selected from the group consisting of hydrogen, alkyl group and aryl group,
$R^{p2}$ is selected from the group consisting of an C3-C18-alkyl group and alkenyl group, p is selected from 0, 1 and 2;

and

C) water.

Advantageously, the present invention allows to achieve improved hydrophobic effects compared to prior art solutions using OCTEO and the like. Further, it was surprisingly found that the dispersion according to the invention is storage-stable for at least 12 months at 20 °C. This storage stability of the dispersion according to the invention allows for constant properties to be obtained over time when treating a surface with said dispersion. The dispersion according to the invention is preferably free of OCTEO and as such environmentally benign.

Preferred embodiments solving the objectives of the present invention particularly well can be found in the dependent claims or in the appended description hereinafter.

**DETAILED DESCRIPTION OF THE INVENTION**

Percentages throughout this specification are weight-percentages (weight-%) unless stated otherwise. Concentrations given in this specification refer to the volume or mass of the entire dispersions or compositions unless stated otherwise.

The term "alkyl" according to the present invention comprises branched or unbranched alkyl groups comprising cyclic and/or non-cyclic structural elements, wherein cyclic structural elements of the alkyl groups naturally require at least three carbon atoms. C1-CX-alkyl in this specification and in the claims refers to alkyl groups having 1 to X carbon atoms (X being an integer). C1-C8-alkyl for example includes, among others, methyl, ethyl, n-propyl, iso-propyl, n-butyl, isobutyl, sec-butyl, tert-butyl, n-pentyl, iso-pentyl, sec-pentyl, tert-pentyl, neo-pentyl, hexyl, heptyl and octyl. Substituted alkyl groups may theoretically be obtained by replacing at least one hydrogen by a functional group. Unless stated otherwise, alkyl groups are preferably selected from substituted or unsubstituted C1-C8-alkyl, more preferably from substituted or unsubstituted C1-C4-alkyl because of their improved water-solubility.

The "alkenyl" is an unsaturated derivative of an alkyl group comprising at least one olefinic (C=C-double) bond. Above-described preferences for the alkyl groups apply for alkenyl groups *mutatis mutandis.*

The term "alkanediyl" is the corresponding group having two free valences (bonding sites). Sometimes, it is referred to as "alkylene" in the art. Said residues according to the present invention comprise cyclic and/or non-cyclic structural elements and can be linear and/or branched. C1-C4-alkanediyl for example includes, among others, methane-1,1-diyl, ethane-1,2-diyl, ethane-1,1-diyl, propane-1,3-diyl, propane-1,2-diyl, propane-1,1-diyl, butane-1,4-diyl, butane-1,3-diyl, butane-1,2-diyl, butane-1,1-diyl, butane-2,3-diyl. Furthermore, individual hydrogen atoms bound to the alkanediyl compound may in each case be substituted by a functional group such as those defined above for the alkyl group. Unless stated otherwise, alkanediyl groups are preferably selected from substituted or unsubstituted C1-C8-alkanediyl, more preferably from substituted or unsubstituted C1-C4-alkanediyl because of their improved water-solubility.

The term "aryl" according to the invention refers to ring-shaped aromatic hydrocarbon residues, for example phenyl or naphthyl where individual ring carbon atoms can be replaced by N, O and/or S, for example benzothiazolyl. Preferably, no carbon atoms are substituted to avoid undesired side-reactions in the preparation of the pyridinium compounds. Furthermore, aryl groups are optionally substituted by replacing a hydrogen atom in each case by a functional group. The term C5-CX-aryl refers to aryl groups having 5 to X carbon atoms (optionally replaced by N, O and/or S) in the ring-shaped aromatic group (X naturally being an integer). C5-C6-aryl is preferred unless stated otherwise. "Arenediyl" is the divalent corresponding group to aryl, e.g. phenylene. Above-described preferences for the aryl groups apply for arenediyl groups *mutatis mutandis.*

Unless stated otherwise, above-described groups are substituted or unsubstituted. Functional groups as substituents are preferably selected from the group consisting of hydroxyl (-OH) and carboxyl (-COzH). The groups are preferably unsubstituted unless stated differently hereinafter.

If more than one residue is to be selected from a given group, each of the residues is selected independently from each other unless stated otherwise hereinafter, meaning they can be selected to be the same members or different members of said group. The bonding sites in some chemical formulae herein may be emphasized by a wavy line. Methods described herein comprise the named method steps. The named method steps are carried out in the given order unless stated otherwise. The methods optionally comprise further method steps to be carried out before, after and/or between said method steps. Preferences and details described for one aspect of the present invention apply *mutatis mutandis* to the other aspects thereof unless stated otherwise or technically unfeasible.

The dispersion according to the invention comprises at least one butyl silane. Butyl silanes are commercially available or can be prepared by known means in the art. The at least one butyl silane is selected from the group consisting of *iso*-butyltrialkoxysilane and *n*-butyltrialkoxysilane.

The iso-butyltrialkoxysilane can be represented by formula (B1):

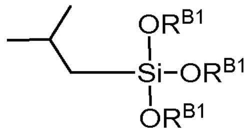

(B1)

wherein each $R^{B1}$ is independently an alkyl group, preferably selected from the group consisting of methyl group and ethyl group.

The *n*-butyltrialkoxysilane can be represented by formula (C1):

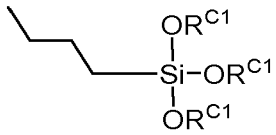

(C1)

wherein each $R^{C1}$ is independently an alkyl group, preferably selected from the group consisting of methyl group and ethyl group.

The at least one butyl silane preferably is an iso-butyltrialkoxysilane, more preferably iso-butyltriethoxysilane (also: (2-methylpropyl)triethoxysilane). The preferred butyl silanes can advantageously penetrate more efficiently into the (mineral) substrate and therefore, allow for an improved hydrophobic effect. The improved penetration into said material further enhances the long-term durability of the hydrophobic effect.

The amount of the at least one butyl silane in the dispersion according to the invention preferably ranges from to 1 to 60 weight-%, more preferably from 5 to 50 weight-%, even more preferably from 10 to 40 weight-%, based on the total weight of the dispersion. If more than one butyl silane is employed, the total amount of all butyl silanes lies preferably in above ranges.

The dispersion according to the invention comprises at least one silane-based compound. The at least one silane-based compound comprises (or preferably consists of) at least two building blocks according to formula (P). The at least two building blocks according to formula (P) are bound to each other by a joint oxygen atom present between the two silicon atoms of the individual building blocks. A silane-based compound consisting of two building blocks according to formula (P) can exemplarily be depicted as follows:

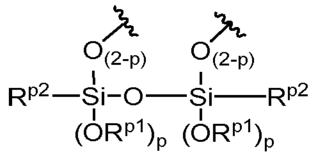

$R^{p1}$ is preferably selected from the group consisting of hydrogen and C1-C4-alkyl group, more preferably from the group consisting of hydrogen, methyl group and ethyl group, even more preferably hydrogen to reduce the amount of VOC.

$R^{p2}$ is preferably selected from the group consisting of C3-C18-alkyl group and vinyl group, $R^{p2}$ is preferably a C3-C8-alkyl group, more preferably a C3-C4-alkyl group, even more preferably *n*-propyl. The alkyl group of $R^{p2}$ is optionally substituted wherein the at least one functional group is selected from the group consisting of halogen group (preferably chlorine and bromine), amino group ($-NH_2$) and thiol group (-SH). Preferably, the alkyl group of $R^{p2}$ is not substituted.

p is preferably selected from 0 and 1.

The at least one silane-based compound preferably comprises (or more preferably consists of) 2 to 40, more preferably 2 to 20, even more preferably 2 to 8, building blocks according to formula (P). The number of building blocks can be determined by standard means known to the person skilled in the art. For example, it can be obtained by GPC (gel permeation chromatography). Generally, said method allows the determination of molecular masses or molecular weight as well as the molecular mass distribution. The GPC analysis method is described in detail in "Modern Size-Exclusion Liquid Chromatography", Andre Striegel et al., Wiley & Sons, 2nd ed., 2009. Preferable standards for calibration are polyethylene oxide/polyethylene glycol, measured on an Agilent 1100 device, using as eluent MEK (methylethylketone) with a flow rate of 1 ml/min and a column set consisting of MZ Gel SD plus columns.

The at least two building blocks according to formula (P) preferably make for at least 50 weight-%, more preferably 75 weight-%, even more preferably 90 weight-%, of the silane-based compound. The at least one silane-based compound preferably consists of the at least two building blocks according to formula (P).

The silane-based compound can be prepared by known means in the art. The preparation of the silane-based

compound (especially propyltriethoxysilane oligomers) can be effected, for example, as described in US 2002/0090316 A1 (see in particular paragraphs 0021 and 0058 to 0062). For example, the silane-based compound can be prepared by controlled hydrolysis and condensation of suitable silanes such as trialkoxyalkylsilanes and trialkoxyalkenylsilanes or the respective trihalo-derivatives of the aforementioned (e.g. trichloropropylsilane), preferably in a suitable solvent such as ethanol. A suitable catalyst is preferably employed, e.g. a suitable pH adjuster such as hydrochloric acid. The controlled hydrolysis and condensation are preferably followed by a distillation step to remove the formed hydrolysis alcohol and the solvent, if any (*vide supra*). The preparation details described for the siloxane compound generally apply *mutatis mutandis.* Preferred examples of the silane-based compounds are oligomers and polymers of the corresponding silanes - especially of *n*-propyltrialkoxysilane - prepared as described hereinbefore for their ease of preparation and pronounced effects in the dispersion according to the invention. An oligomer in the context of the present invention comprises 2 to 10 building block according to formula (P), a polymer comprises 11 or more of said building blocks.

The amount of the at least one silane-based compound in the dispersion according to the invention preferably ranges from to 1 to 60 weight-%, more preferably from 5 to 50 weight-%, even more preferably from 10 to 40 weight-%, based on the total weight of the dispersion. If more than one silane-based compound is employed, the total amount of all silane-based compounds lies preferably in above ranges.

The weight ratio of the at least one butyl silane and the at least one silane-based compound ranges from 0.1 to 10, preferably from 0.2 to 5, more preferably from 0.25 to 4. In case more than butyl silane and/or silane-based compound is used in the dispersion according to the invention, the total weight thereof is used to calculate the weight ratio. To further improve the penetration depth of the dispersion into the substrate to be treated, said weight ratio should be at least 1 (using one of the upper limits described hereinbefore), preferably 1 to 4, more preferably 3 to 4.

The dispersion comprises water. The amount of water preferably ranges from 1 to 60 weight-%, more preferably from 10 to 55 weight-%, even more preferably from 30 to 50 weight-%, based on the total weight of the dispersion.

The dispersion according to the invention typically comprises at least one emulsifier. Emulsifiers are also referred to as surfactants or wetting agents in the art. The dispersion according to the invention preferably comprises:

D) at least one non-ionic emulsifier.

The non-ionic emulsifier is preferably not a silicon functional emulsifier such as silicon functional emulsifier A as disclosed in WO 2006/081891 A1 (see in particular page 12, line 12 to page 13, line 9). Silicon functional emulsifiers do not always improve the storage stability of dispersion sufficiently. This was particularly surprising as they excel when using OCTEO and condensates thereof (instead of the butyl silane and the silane-based compound as in the dispersion according to the invention).

Preferably, the at least one non-ionic emulsifier has a HLB value ranging from 8 to 13, preferably from 9 to 12, more preferably from 10 to 11.

Preferably, the at least one non-ionic emulsifier is represented by formula (E):

$$R^{E1}\left[O-E\right]_{n}R^{E2} \qquad \text{(E)}$$

wherein

$R^{E1}$ is a C8-C22-alkyl group;
$R^{E2}$ is selected from the group consisting of hydrogen, alkyl group, hydroxyl group and oxyalkyl group;
each E independently is an alkanediyl group; and
n is an integer ranging from 1 to 100.

$R^{E1}$ is preferably a C10-C18-alkyl group, more preferably a C12-C16-alkyl group. Preferably, $R^{E1}$ is a branched alkyl group. Most preferably, $R^{E1}$ is an iso-C13-alkyl group.

$R^{E2}$ is preferably selected from the group consisting of, hydroxyl group, oxymethyl group and methyl group. More preferably, $R^{E2}$ is a hydroxyl group.

E is preferably selected from the group consisting of 1,2-ethanediyl group, 1,2-propanediyl group and 1,3-propanediyl group.

n preferably ranges from 2 to 10, preferably from 3 to 7, more preferably from 4 to 6.

The at least one non-ionic emulsifier (especially the at least one non-ionic emulsifier according to formula (E)) advantageously improves the shelf life of the dispersion according to the invention. This improvement is also notable compared to the use of other emulsifiers.

The amount of the at least one non-ionic emulsifier preferably ranges from 0.1 to 10 weight-%, more preferably from 0.5 to 5 weight-%, even more preferably from 1.0 to 2.0 weight-%, based on the total dispersion. Higher amounts of the

at least one non-ionic emulsifier do not increase the shelf life of the dispersion according to the invention any further and thus only increase the cost, while lower amounts might not always be sufficient to achieve said effect.

The dispersion according to the invention preferably comprises at least one anionic emulsifier. The at least one anionic emulsifier is preferably represented by formula (A)

$$R^A\text{-}A \qquad (A)$$

wherein

$R^A$ is a C8-C22-alkyl group; and
A is selected from the group consisting of carboxylic acid group, sulfonic acid group (-SOsH) and phosphonic acid group ($-PO_3H_2$) or a salt thereof.

$R^A$ is preferably a C10-C18-alkyl group, more preferably a C12-C16-alkyl group. A is preferably a sulfonic acid group or a salt thereof.

The amount of the at least one anionic emulsifier preferably ranges from 0.1 to 2 weight-%, more preferably from 0.2 to 1 weight-%, even more preferably from 0.3 to 0.6 weight-%, based on the total dispersion. Higher amounts of the at least one anionic emulsifier do not increase the shelf life of the dispersion according to the invention any further and thus only increase the cost, while lower amounts might not always be sufficient to achieve said effect.

The at least one anionic emulsifier in combination with the at least one non-ionic emulsifier significantly improves the shelf life of the dispersion according to the invention. The combination of the at least one non-ionic emulsifier (especially one according to formula (E)) and at least one anionic emulsifier (especially one according to formula (A)) gives an enhanced storage-stability compared to using one of the named emulsifiers alone; they act synergistically. For this reason, the dispersion according to the invention preferably comprises at least one non-ionic emulsifier and at least one anionic emulsifier. Most preferably, the dispersion according to the invention comprises at least one non-ionic emulsifier according to formula (E) and at least one anionic emulsifier according to formula (A). In the latter case, it is preferred that the sum of the amount of the at least one non-ionic emulsifier according to formula (E) and the amount of the at least one anionic emulsifier according to formula (A) does not exceed 10.0 weight-%, based on the total weight of the dispersion. More preferably, the sum does not exceed 2.0 weight-%. Higher sums thereof may in some cases weaken the hydrophobic effect caused by the dispersion according to the invention.

The dispersion according to the invention preferably comprises at least one preservative. This preservative advantageously improves the lifetime of the dispersion. Suitable preservatives are known in the art. The amount of the preferred preservative preferably ranges from 0.01 to 1 weight-%, more preferably from 0.1 to 0.3 weight-%, based on the total weight of the dispersion. Preferred preservatives are selected from the group consisting of chloromethylisothiazolinone (CIT), methylisothiazolinone (MIT) and mixtures of the aforementioned.

The dispersion according to the invention preferably comprises at least one defoamer. The amount of the at least one defoamer preferably ranges from 0.02 to 2 weight-%, more preferably from 0.1 to 1.0 weight-%, even more preferably from 0.4 to 0.8 weight-%, based on the total weight of the dispersion. Defoamers are known in the art and the person skilled in the art can select a suitable defoamer based on routine experiments. A defoamer found particularly suitable is a mixture of foam-inhibiting polymers and hydrophobic solvents available under the tradename BYK 011 (obtainable from BYK-Chemie GmbH).

In addition to the components described hereinbefore, the dispersion optionally comprises one or more customary auxiliaries selected from fragrances, corrosion inhibitors, rheological auxiliaries such as bentonites or catalysts such as organic tin, titanium or zirconium compounds, e.g. dibutyltin dilaurate, titanium alkoxides or zirconium alkoxides (e.g. tetrabutyl titanate). The optional one or more customary auxiliaries can be present in amounts of from 0.005 to 10 weight-%, based on the total weight of the dispersion.

Preferably, the total amount of alkyl silicates such as methyl silicate, ethyl silicate or propyl silicate is 1 weight-% or less, preferably 0.1 weight-% or less, based on the total weight of the dispersion. Ideally, the dispersion is free of alkyl silicates, in particular of methyl silicate, ethyl silicate and propyl silicate (disregarding trace impurities occasionally present in technical raw materials). Alkyl silicates may in some cases weaken the desired effects of the dispersion.

Preferably, the total amount of acrylates or polyacrylates, specifically fluoroacrylate or oligomers/polymers derived therefrom, in the dispersion according to the invention is 1 weight-% or less, preferably 0.1 weight-% or less, based on the total weight of the dispersion. Ideally, the dispersion is free of said compounds (disregarding trace impurities occasionally present in technical raw materials). Acrylates or polyacrylates may in some cases weaken the desired effects of the dispersion.

Preferably, the total amount of hydrophobic metal oxides in the dispersion according to the invention is 1 weight-% or less, more preferably 0.05 weight-% or less, even more preferably 0.005 weight-% or less, based on the total weight of the dispersion. Ideally, the dispersion is free of hydrophobic metal oxides (disregarding trace impurities occasionally

present in technical raw materials). Hydrophobic metal oxides in the context of the present invention are oxides, hydroxides and oxohydrates of aluminum, silicon and titanium, especially those treated with a hydrophobizing agent like fatty acids, fatty alcohols, alkyl silicates or alkylsilanes. Hydrophobic metal oxides may shorten the lifetime of the dispersion according to the invention.

Preferably, for environmental and health reasons, the total amount of cyclic siloxanes in the dispersion according to the invention is 1 weight-% or less, more preferably 0.05 weight-% or less, even more preferably 0.005 weight-% or less, based on the total weight of the dispersion. Ideally, the dispersion is free of cyclic siloxanes.

A dispersion in the context of the present invention is to be understood as a material comprising more than one phase where at least one of the phases consists of finely divided phase domains (the dispersed phase), often in the colloidal size range, dispersed throughout a continuous phase.

The continuous and the dispersed phase are preferably liquids (at 20 °C) and therefore, the dispersion according to the invention is preferably an emulsion, more preferably an oil-in-water dispersion. The at least one butyl silane and the at least one silane-based compound are present in the oil-phase of the dispersion according to the invention.

The width of the droplet size distribution, expressed as the span D:

$$D = \frac{d_{90} - d_{10}}{d_{50}},$$

in the dispersion according to the invention preferably ranges from 0.9 to 1.15, more preferably D ranges from 1.05 to 1.15. Dispersions having such droplet size distributions are particularly storage stable.

The pH value of the dispersion can be adjusted by at least one optional pH adjuster. The at least one optional pH adjuster is a base or an acid depending on the desired pH value of the dispersion. Suitable acids are *inter alia* inorganic and organic acids whereof organic acids are preferred. A useful inorganic acid is hydrochloric acid. Preferable organic acids are formic acid and acetic acid. Suitable bases are *inter alia* alkaline hydroxides such as sodium hydroxide, earth alkaline hydroxides and hydrogen carbonates such as $NaHCO_3$. Compounds having free amino groups (*i.e.* amines but also amino-group containing silanes and siloxanes) are less preferred as they might catalyze an undesired hydrolysis / condensation reaction of components A) and B) in the dispersion and thereby, may shorten the shelf life of the dispersion. For this reason, it is preferred that the maximum amount of compounds having free amino groups is 1 weight-%, preferably, 0.05 weight-%; ideally, the dispersion according to the invention is free of such compounds.

The pH value of dispersion preferably ranges from 4.0 to 9.2, more preferably from 6.0 to 8.0, even more preferably from 7.0 to 8.5. The pH value is measured in accordance with DIN EN ISO 10523 (2012). The at least one optional pH adjuster is preferably used in an amount necessary to adjust the pH value in accordance with above ranges.

In a preferred embodiment of the present invention, the dispersion according to the invention comprises (or consists of)

A) at least one butyl silane;
B) at least one silane-based compound comprising at least two building blocks represented by formula (P);
C) water;
D) at least one non-ionic emulsifier;
E) at least one anionic emulsifier;
F) preferably, at least one preservative;
G) preferably, at least one defoamer;
H) optionally, at least one pH adjuster; and
I) optionally, one or more customary auxiliaries described above.

Preferences and details relating to the dispersion according to the invention described hereinbefore apply *mutatis mutandis* to this preferred embodiment thereof. This includes in particular the amounts and ratios of the components of the dispersion.

The dispersion according to the invention is preferably used to treat a surface of a (mineral) substrate, preferably a surface of a substrate described hereinafter. The use of the dispersion according to the invention on said surface renders it hydrophobic and reduces the water-uptake of the substrate.

The present invention concerns in a further aspect a method of preparing the dispersion according to the invention, comprising the method steps

A1) providing an aqueous phase comprising water;
A2) providing the at least one butyl silane and the at least one silane-based compound;
A3) mixing the aqueous phase and the at least one butyl silane and the at least one silane-based compound; and
A4) applying a first pressure stage and a second pressure stage on the mixture of the aqueous phase and the at least

one butyl silane and the at least one silane-based compound in a high pressure homogenizer.

By carrying out the inventive method, the dispersion according to the invention is obtained.

The method according to the invention comprises method steps A1) to A4). Method steps A3) and A4) are carried out in the given order. The order of method steps A1) and A2) can be reversed if desired. In any case, method steps A1) and A2) are performed before method steps A3) and A4). The method according to the invention optionally comprises further method steps to be carried out before, after and/or between said method steps.

The method according to the invention allows the facile preparation of storage-stable dispersions comprising butyl silanes which before was not possible.

In method step A1), the aqueous phase comprising water is provided. If the aqueous phase is to comprise further components (other than water), they are mixed with the water and ideally dissolved therein or at least mixed with water until a homogenous phase is obtained, e.g. by stirring. Possible components to be present in the aqueous phase are the at least one non-ionic emulsifier, the at least one anionic emulsifier, the at least one preservative, the at least one defoamer and the at least one pH adjuster.

In method step A2), the at least one butyl silane and the at least one silane-based compound are provided. Optionally, the at least one butyl silane and the at least one silane-based compound are mixed and further components soluble in or miscible with therewith are added to said mixture. Preferably, the at least one butyl silane and the at least one silane-based compound are not mixed and mixing takes places in the following method step A3) to save time.

In method step A3), the aqueous phase and the at least one butyl silane and the at least one silane-based compound are mixed. Mixing means in this context that the two phase are at least brought into contact with each other. They are preferably mixed (e.g. by stirring) in the high pressure homogenizer used in method step A4).

The duration of method step A3) preferably ranges from 15 to 60 minutes, more preferably from 20 to 40 minutes, even more preferably from 25 to 35 minutes.

The temperature is not particularly limited during method step A3). Preferably, the temperature (of the mixture) used in method step A3) preferably ranges from 1 to 8 °C, more preferably from 3 to 5 °C, even more preferably from 4 to 6 °C.

In method step A4), the mixture of the aqueous phase and the at least one butyl silane and the at least one silane-based compound (obtained in method step A3)) is treated in a high pressure homogenizer. High pressure homogenizers are customary tools used for preparing dispersions. Such homogenizers are obtainable, for example, from APV Gaulin GmbH, Lübeck. A particularly suitable homogenizer is available under the tradename APV Gaulin 15 from above company. In the high pressure homogenizer, the setting and reporting of the pressure(s) involves mechanical setting of the width of the nozzles or the nozzle gap(s). The high pressure homogenizer preferably comprises at least two nozzles or nozzle gaps such that a first and a second pressure stage can be set up. A first pressure stage and a second pressure stage are applied in said high pressure homogenizer on the mixture of the aqueous phase and the at least one butyl silane and the at least one silane-based compound.

The pressure used in the first pressure stage preferably ranges from 5 to 50 MPa, more preferably from 10 to 40 MPa, even more preferably from 25 to 35 MPa. The pressure used in the second pressure stage preferably ranges from 1 to 10 MPa, more preferably from 2 to 5 MPa, even more preferably from 2,5 to 4 MPa.

The duration of method step A4) ranges from 5 to 30 minutes, preferably from 10 to 20 minutes, more preferably from 14 to 16 minutes.

The temperature (of said mixture) used in method step A4) preferably ranges from 1 to 8 °C, more preferably from 3 to 5 °C, even more preferably from 4 to 6 °C. Said temperature ranges during homogenization in method step A4) further improve the storage stability of the resulting dispersion.

It is generally preferable to avoid the stirring-in of air in the mixtures / phases during the method according to the invention, especially in method steps A1) and/or A2). Air in the mixtures / phases may lead to an undesired increase of interphases being formed, said increase resulting in the necessity to employ higher amounts of emulsifiers which in turn may worsen the hydrophobic properties of the treated substrates.

The present invention further pertains to a dispersion obtained by the inventive method of preparing a dispersion. The thus obtained dispersion is preferably stored at room temperature (*i.e.* 20°C).

In another aspect, the present invention is directed at a method for treating a surface of a (mineral) substrate comprising the method steps

B1) providing the substrate having the surface; and
B2) treating the surface of the substrate with the dispersion according to the invention;
such that a treated surface is obtained.

The method according to the invention significantly reduces the water-uptake of a treated substrate. The treatment of the method according to the invention advantageously renders the treated surface hydrophobic.

The method according to the invention comprises method steps B1) and B2). These method steps are carried out in the given order. The method according to the invention optionally comprises further method steps to be carried out before, after and/or between said method steps.

In method step B1) of the method according to the invention, a substrate comprising a surface is provided. The substrate is preferably a (porous) mineral substrate, said mineral substrate preferably comprises or more preferably consists of at least one mineral material selected from the group consisting of concrete, limestone, sandstone, terracotta, marble, loam, cement, granite, sand, shale, artificial stone, plaster, clay and mixtures of the aforementioned.

Optionally, the (mineral) substrate is in the form of bricks, tiles, clinker, roof tiles, fiber cement boards or similar items used in the building/construction industry.

Preferably, the mineral substrate comprises at least one fiber, more preferably a plurality of fibers. Even more preferably, the mineral substrate is a fiber-reinforced cement. Preferable fibers are selected from the group consisting of carbon fibers, cellulose fibers, (alkaline-resistant) glass fibers, (water-insoluble) polyvinyl alcohol fibers, homopolyacrylonitrile fibers and mixtures of the aforementioned.

The method optionally comprises a further method step

B1.i) pretreating the surface of the substrate.

The method step B1.i) is to be carried out between method steps B1) and B2). Pretreatments are known in the art and include *inter alia* cleaning the surface (e.g. with an aqueous solution comprising a surfactant), chemical polishing (e.g. with an aqueous solution comprising an oxidant and/or an abrasive substance such as silica), high pressure or water vapor cleaning or abrasive brushing the surface and the like. The method step B1.i) aims to make the surface more receptive for the treatment with the dispersion according to the invention in method step B2).

In method step B2) of the method according to the invention, the surface of the substrate is treated with the dispersion according to the invention.

The temperature of the dispersion according to the invention in method step preferably ranges from 5 to 50 °C, more preferably from 10 to 40 °C, even more preferably from 15 to 25 °C.

The application quantity of the dispersion according to the invention on the surface of the substrate in method step B2) depends *inter alia* on absorptivity of the substrate. It preferably ranges from 50 to 800 g/$m^2$, more preferably from 100 to 500 g/$m^2$, even more preferably from 200 to 350 g/$m^2$.

The means of application in method step B2) are not particularly limited. The surface of the substrate can be treated with the dispersion according to the invention by means of spraying, dipping, brushing and flooding. Preference is given to spray applications e. g. with an airless equipment.

The method according to the invention further optionally comprises the method step c) to be included after method step B2)

c) drying the substrate.

The substrate is preferably dried at a temperature of 10 °C to a temperature of 80°C. For energy saving reasons, preference is given to drying the substrate at ambient temperature (typically around 20 °C). Drying is preferably continued until all volatile components of the dispersion according to the invention have been removed by evaporation. Conventional means of drying can be used without restrictions such as ovens, if needed.

The present invention further concerns a (treated) article comprising

i) a substrate having at least one surface, preferably a mineral substrate, more preferably the mineral substrate is selected from the group consisting of concrete, limestone, sandstone, terracotta, marble, loam, cement, granite, sand, shale, artificial stone, plaster, clay and mixtures of the aforementioned; and

ii) at least one layer obtained by treating the substrate with the dispersion according to the invention.

The layer in the context of the present invention is to be understood to encompass any sort of structural surficial treatment of the substrate surface. It specifically includes the treatment of any pores present in the surface. The layer obtained by treating the substrate with the dispersion according to the invention is preferably present on the surface of the substrate. It is preferably directly on the surface of the substrate.

The present invention further relates to a (constructional) structure comprising at least one article as described hereinbefore. Said structure is preferably man-made. Exemplary structures in the context of the present invention are buildings and constructions such as walls, floors, bridges, tunnels, harbors (in particular harbor facilities and docks) and streets. The structures are for example made with one or more of the articles according to the invention.

The invention will now be illustrated by reference to the following non-limiting examples.

## EXAMPLES

Commercial products were used as described in the technical datasheet available on the date of filing of this specification unless stated otherwise hereinafter.

The average droplet size and the width of the distribution can be determined using a Coulter® LS particle size analyzer, with, if necessary, the droplet size distribution being depicted graphically by plotting the percentage by volume of the droplets against the droplet diameter (this preferably on a logarithmic scale). In the case of a monomodal distribution, the curve has one maximum, and in the case of a bimodal distribution, it has two maxima. If the position of the maximum of such a distribution curve is reported in the following in $\mu$m, this reported value relates in the case of a bimodal or multimodal distribution to the first maximum having the smallest droplet diameter.

**Dispersion Example 1 (according to the invention):**

Composition of the dispersion:

| amount [weight-%] | compound | function |
|---|---|---|
| 47.88 | water | |
| 10.0 | *iso*-butyltriethoxysilane | butyl silane |
| 40.0 | *n*-propyltriethoxysilane oligomer having a degree of oligomerization of 3 to 8 | silane-based compound |
| 1.4 | non-ionic emulsifier based on saturated *iso*-C13 Alcohol | non-ionic emulsifier |
| 0.45 | sodium lauryl sulfate | anionic emulsifier |
| 0.2 | CIT/MIT | preservative |
| 0.07 | $NaHCO_3$ | pH adjuster |

*) CIT = chloromethylisothiazolinone, MIT = methylisothiazolinone

The aqueous phase was prepared by dissolving sodium lauryl sulfate, the non-ionic emulsifier, the preservative and the pH adjuster in water (method step A1)). To that end, the mixture was stirred for 5 to 10 minutes at room temperature. Then, the oil phase was prepared by carefully mixing the butyl silane and the silane-based compound to avoid the stirring-in of air (method step A2)). Subsequently, the two phases were mixed in a high pressure homogenizer (APV Gaulin 15, method step A3) for 30 minutes and exposed to first pressure stage of 15 MPa and a second pressure stage employing 3 MPa (method step A4)) for 15 minutes.

The resulting dispersion was an oil-in-water emulsion and stable for more than 12 months at room temperature. The storage stability of a sample diluted with water also proved to be good.

The dispersion had the following droplet size distribution:

mean droplet size 0.27 microns, position of the maximum droplet size distribution curve at 0.30 microns, $d_{90}$ = 0.41 microns, $d_{50}$ = 0.30 microns, $d_{10}$ = 0.07 microns. The span D was 1.13.

**Dispersion Example 2 (according to the invention):**

Composition of the dispersion:

| amount [weight-%] | compound | function |
|---|---|---|
| 47.88 | water | |
| 40.0 | *iso*-butyltriethoxysilane | butyl silane |
| 10.0 | *n*-propyltriethoxysilane oligomer having a degree of oligomerization of 3 to 8 | silane-based compound |
| 1.4 | non-ionic emulsifier is based on saturated *iso*-C13 Alcohol | non-ionic emulsifier |
| 0.45 | sodium lauryl sulfate | anionic emulsifier |
| 0.2 | CIT/MIT | preservative |
| 0.07 | $NaHCO_3$ | pH adjuster |

The dispersion was prepared in the same way as described for Example 1.

The dispersion had the following droplet size distribution:

mean droplet size 0.15 microns, position of the maximum droplet size distribution curve at 0.14 microns, $d_{90}$ = 0.23 microns, $d_{50}$ = 0.14 microns, $d_{10}$ = 0.08 microns. The span D was 1.06.

The resulting dispersion was an oil-in-water emulsion and stable for more than 12 months at room temperature. The storage stability of a sample diluted with water (1 part per weight of the dispersion and 1.5 parts per weight of water) also proved to be good.

**Dispersion Example 3 (comparative example)**

Composition of the dispersion:

| amount [weight-%] | compound |
|---|---|
| 49.9 | water |
| 42.7 | octyltriethoxysilane |
| 4.8 | *n*-octyltriethoxysiloxane |
| 0.9 | silicon functional emulsifier A (see WO 2006/081891 A1, page 12, line 12 to page 13, line 9) |
| 0.63 | sodium lauryl sulfate |
| 0.8 | roll-off additive (reactive organopolysiloxane) |
| 0.2 | CIT/MIT |
| 0.07 | $NaHCO_3$ |

The aqueous phase was prepared by dissolving sodium lauryl sulfate, the silicon functional emulsifier A, the roll-off additive, the preservative and NaHCOs in water. To that end, the mixture was stirred for 5 to 10 minutes at room temperature. Then, the oil phase was prepared by carefully mixing octyltriethoxysiloxane and octyltriethoxysilane to avoid the stirring-in of air. Subsequently, the two phases were combined in a high pressure homogenizer (APV Gaulin 15). In a first pressure stage, a pressure of 15 MPa was applied, in a second pressure stage a pressure of 3 MPa. Emulsifying time was in total 45 minutes.

The resulting dispersion was stable for more than 12 months at room temperature. The storage stability of a sample diluted with water (1 part per weight of the dispersion and 1.5 parts per weight of water) also proved to be good.

The dispersion had the following droplet size distribution:

mean droplet size= 0.27 microns, position of the maximum droplet size distribution curve at 0.27 microns, $d_{90}$ = 0.35 microns, $d_{50}$ = 0.26 microns, $d_{10}$ = 0.19 microns. The span D was 0.61.

**Dispersion Example 4 (comparative example)**

Composition of the dispersion:

| amount [weight-%] | compound |
|---|---|
| 57.88 | water |
| 30.0 | octyltriethoxysilane |
| 10.0 | n-propyltriethoxysilane oligomer having a degree of oligomerization of 3 to 8 |
| 1.4 | non-ionic emulsifier is based on saturated *iso*-C13-alcohol |
| 0.45 | sodium lauryl sulfate |
| 0.2 | CIT/MIT |
| 0.07 | $NaHCO_3$ |

The aqueous phase was prepared by dissolving sodium lauryl sulfate, the non-ionic emulsifier is based on saturated *iso*-C13-alcohol, the preservative and $NaHCO_3$ in water. To that end, the mixture was stirred for 5 to 10 minutes at room temperature. Then, the oil phase was prepared by carefully mixing octyltriethoxysilane and the oligomer of n-propyltriethoxysilane to avoid the stirring-in of air. Subsequently, the two phases were combined in a high pressure homogenizer (APV Gaulin 15). In a first pressure stage, a pressure of 15 MPa was applied, in a second pressure stage a

pressure of 3 MPa. Emulsifying time was in total 45 minutes.

The resulting dispersion was stable for more than 12 months at room temperature. The storage stability of a sample diluted with water (1 part per weight of the dispersion and 1 part per weight of water) also proved to be good.

The dispersion had the following droplet size distribution:

medium droplet size 0.33 microns, Position of the maximum droplet size distribution curve at 0.32 microns, $d_{90}$ = 0.44 microns, $d_{50}$ = 0.33 microns, $d_{10}$ = 0.23 microns. The span D was 0.65.

**Dispersion Example 5 (Comparative example based on example 3 of EP 1 843 991)**

Composition of the dispersion:

| amount [weight-%] | compound |
|---|---|
| 47.33 | water |
| 40.0 | propyltriethoxysilane |
| 10.0 | *n*-propyltriethoxysilane oligomer having a degree of oligomerization of 3 to 8 |
| 0.96 | silicon functional emulsifier |
| 0.64 | sodium lauryl sulfate |
| 0.8 | roll-off additive (reactive organopolysiloxane) |
| 0.2 | CIT/MIT |
| 0.07 | $NaHCO_3$ |

The aqueous phase was prepared by dissolving sodium lauryl sulfate, the silicon functional emulsifier, the roll-off additive, the preservative and $NaHCO_3$ in water. To that end, the mixture was stirred for 5 to 10 minutes at room temperature. Then, the oil phase was prepared by carefully mixing propyltriethoxysilane and the oligomer of *n*-propyltriethoxysilane to avoid the stirring-in of air. Subsequently, the two phases were combined in a high pressure homogenizer (APV Gaulin 15). In a first pressure stage, a pressure of 15 MPa was applied, in a second pressure stage a pressure of 3 MPa. Emulsifying time was in total 45 minutes.

The resulting dispersion lacked storage stability and phase separation occurred withing 4 days when stored at 60 °C and 40°C, respectively. When storing at room temperature, the phases of the dispersion separated within 31 days.

**Application examples**

Concrete test specimens were used as substrates in the following Application Examples.

The Dispersion Examples 1 to 5 were diluted with water to an active content of 20% before application. The active content is calculated based on the total amount of silicon compounds used in the dispersion examples. The silicon compounds in this context are the at least one butyl silane and the at least one silane-based compound but also propyltriethoxysilane and n-octyltriethoxysilane and the respective oligomers thereof used in the comparative examples. Following this, 40 g of Dispersion Example 1 (having an active content of 50 %) has to be diluted with 60 g of water to give a diluted dispersion having an active content of 20 %.

The thus diluted dispersions were applied onto the specimens by dipping the latter into the diluted dispersions and allowing the treated specimens to dry at room temperature. The application quantity was determined by weighing the specimens before and after the treatment.

The thus treated specimens were dried for 14 days (at room temperature, *i.e.* 20 °C) before the following tests were carried out:

1) Reduction of water-uptake: The hydrophobic properties were expressed by the reduction of the water-uptake of the individual dispersions. For this purpose, concrete cubes of the edge length of 5 cm were treated with the specified amount of the dispersions by dipping. After drying (*vide supra*), the treated cubes were stored completely underwater for 24 hours. Adhering water droplets were carefully removed with a cellulose cloth. The weight gain was then measured. The reduction in water-uptake (also referred to as water absorption in the art), based on DIN EN 13580, was compared to an untreated cube.

2) Penetration depth: To determine the penetration depth, the treated specimens were broken into two pieces and the fracture surfaces were wetted with an aqueous color system (0.05 weight-% Methylene blue in water). The

unimpregnated zone became colored, while the impregnated zone remained colorless. The width of the treated surface up to the color boundary surface was measured at eight different points of the specimen body allowing the (average) penetration depth (in mm) to be calculated.

The results are shown in the table below.

Table 1: results.

| # | substrate | Example | application quantity [g/m$^2$] | reduction of water-uptake [%] | penetration depth [mm] |
|---|---|---|---|---|---|
| #1 | concrete | Example 1 | 200 | 95.0 | 1.7 |
| #2 | concrete | Example 2 | 200 | 95.0 | 3.1 |
| #3 | concrete | Example 3 | 204 | 93.2 | 2.0 |
| #4 | concrete | Example 4 | 213 | 92.0 | 1.8 |
| #5 | concrete | Example 5 | 200 | 82.3 | 2.0 |

The inventive examples 1 and 2 showed an improved reduction of water-uptake compared to all prior art solutions. Further, the inventive examples are free of octyltriethoxysilane which is toxic to aquatic organism and are therefore, environmentally friendly. The substrate treated with dispersion example 2 showed a superior penetration depth. This is due to the favorable weight ratio of the at least one butyl silane and the at least one silane-based compound used in dispersion example 2.

Other embodiments of the present invention will be apparent to those skilled in the art from a consideration of this specification or practice of the invention disclosed herein. It is intended that the specification and examples be considered as exemplary only, with the true scope of the invention being defined by the following claims only.

## Claims

1. A dispersion for treating a surface of a substrate comprising

   A) at least one butyl silane selected from the group consisting of *iso*-butyltrialkoxysilane and *n*-butyltrialkoxysilane;
   B) at least one silane-based compound comprising at least two building blocks represented by formula (P)

   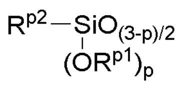
   (P)

   wherein

   $R^{p1}$ is selected from the group consisting of hydrogen, alkyl group and aryl group,
   $R^{p2}$ is selected from the group consisting of an C3-C18-alkyl group and alkenyl group,
   p is selected from 0, 1 and 2; and

   C) water.

2. The dispersion according to claim 1 **characterized in that** it comprises:
   D) at least one non-ionic emulsifier.

3. The dispersion according to claim 2 **characterized in that** the at least one non-ionic emulsifier is represented by formula (E):

$$R^{E1}\left[O-E\right]_n R^{E2} \qquad (E)$$

   wherein

$R^{E1}$ is a C8-C22-alkyl group;
$R^{E2}$ is selected from the group consisting of hydrogen, alkyl group, hydroxyl group and oxyalkyl group;
each E independently is an alkanediyl group; and
n is an integer ranging from 1 to 100.

**4.** The dispersion according to any one of the preceding claims **characterized in that** the at least one silane-based compound comprises 2 to 40, preferably 2 to 20, more preferably 2 to 8, building blocks according to formula (P).

**5.** The dispersion according to any one of the preceding claims **characterized in that** the butyl silane is an *iso*-butyltrialkoxysilane, preferably *iso*-butyltriethoxysilane.

**6.** The dispersion according to any one of the preceding claims **characterized in that** the amount of the at least one silane-based compound ranges from to 1 to 60 weight-%, preferably from 5 to 50 weight-%, more preferably from 10 to 40 weight-%, based on the total weight of the dispersion.

**7.** The dispersion according to any one of the preceding claims **characterized in that** the amount of the at least one butyl silane ranges from to 1 to 60 weight-%, preferably from 5 to 50 weight-%, more preferably from to 10 to 40 weight-%, based on the total weight of the dispersion.

**8.** The dispersion according to any one of the preceding claims **characterized in that** weight ratio of the at least one butyl silane and the at least one silane-based compound ranges from 0.1 to 10, preferably from 0.2 to 5, more preferably from 0.25 to 4.

**9.** The dispersion according to any one of the preceding claims **characterized in that** the amount of the at least one non-ionic emulsifier ranges from 0.1 to 10 weight-%, preferably from 0.5 to 5 weight-%, more preferably from 1.0 to 2.0 weight-%, based on the total dispersion.

**10.** The dispersion according to any one of the preceding claims **characterized in that** the amount of water ranges from 1 to 60 weight-%, preferably from 10 to 55 weight-%, more preferably from 30 to 50 weight-%, based on the total weight of the dispersion.

**11.** The dispersion according to any one of the preceding claims **characterized in that** the dispersion comprises at least one anionic emulsifier, preferably represented by formula (A)

$$R^{A}\text{-}A \qquad (E)$$

wherein

$R^A$ is a C8-C22-alkyl group; and
A is selected from the group consisting of carboxylic acid group, sulfonic acid group and phosphonic acid group or a salt thereof.

**12.** A method of preparing the dispersion according to any one of claims 1 to 11, comprising the method steps

A1) providing an aqueous phase comprising water;
A2) providing the at least one butyl silane and the at least one silane-based compound;
A3) mixing the aqueous phase and the at least one butyl silane and the at least one silane-based compound; and
A4) applying a first pressure stage and a second pressure stage on the mixture of the aqueous phase and the at least one butyl silane and the at least one silane-based compound in a high pressure homogenizer.

**13.** A dispersion obtained by the method according to claim 12.

**14.** A method for treating a surface of a substrate comprising the method steps

B1) providing the substrate having the surface;
B2) treating the surface of the substrate with the dispersion according to claims 1 to 11 or 13; such that a treated surface is obtained.

**15.** An article comprising

i) a substrate having at least one surface, preferably a mineral substrate, more preferably the mineral substrate is selected from the group consisting of concrete, limestone, sandstone, terracotta, marble, loam, cement, granite, sand, shale, artificial stone, plaster, clay and mixtures of the aforementioned; and
ii) at least one layer obtained by treating the substrate with the dispersion according to claims 1 to 11 or 13.

**Patentansprüche**

**1.** Dispersion zum Behandeln einer Oberfläche eines Substrats, umfassend

A) mindestens ein Butylsilan, das ausgewählt ist aus der Gruppe bestehend aus iso-Butyltrialkoxysilan und n-Butyltrialkoxysilan;
B) mindestens eine auf Silan basierende Verbindung, die mindestens zwei Baublöcke umfasst, die dargestellt sind durch Formel (P)

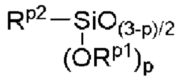
(P)

wobei

$R^{p1}$ ausgewählt ist aus der Gruppe bestehend aus Wasserstoff, Alkylgruppe und Arylgruppe,
$R^{p2}$ ausgewählt ist aus der Gruppe bestehend aus einer C3-C18-Alkylgruppe und Alkenylgruppe,
p ausgewählt ist aus 0, 1 und 2 und

C) Wasser.

**2.** Dispersion nach Anspruch 1, **dadurch gekennzeichnet, dass** sie Folgendes umfasst:
D) mindestens einen nichtionischen Emulgator.

**3.** Dispersion nach Anspruch 2, **dadurch gekennzeichnet, dass** der mindestens eine nichtionische Emulgator durch Formel (E) dargestellt ist:

$$R^{E1}\left[O-E\right]_n R^{E2} \qquad (E)$$

wobei

$R^{E1}$ eine C8-C22-Alkylgruppe ist;
$R^{E2}$ ausgewählt ist aus der Gruppe bestehend aus Wasserstoff, Alkylgruppe, Hydroxylgruppe und Oxyalkylgruppe;
E jeweils unabhängig eine Alkandiylgruppe ist; und
n eine ganze Zahl im Bereich von 1 bis 100 ist.

**4.** Dispersion nach einem der vorstehenden Ansprüche, **dadurch gekennzeichnet, dass** die mindestens eine auf Silan basierende Verbindung 2 bis 40, vorzugsweise 2 bis 20, besonders bevorzugt 2 bis 8, Baublöcke gemäß Formel (P) umfasst.

**5.** Dispersion nach einem der vorstehenden Ansprüche, **dadurch gekennzeichnet, dass** das Butylsilan ein *iso*-Butyltrialkoxysilan, vorzugsweise *iso*-Butyltriethoxysilan, ist.

**6.** Dispersion nach einem der vorstehenden Ansprüche, **dadurch gekennzeichnet, dass** die Menge der mindestens einen auf Silan basierenden Verbindung im Bereich von 1 bis 60 Gew.-%, vorzugsweise von 5 bis 50 Gew.-%, besonders bevorzugt von 10 bis 40 Gew.-%, bezogen auf das Gesamtgewicht der Dispersion, liegt.

**7.** Dispersion nach einem der vorstehenden Ansprüche, **dadurch gekennzeichnet, dass** die Menge des mindestens

einen Butylsilans im Bereich von 1 bis 60 Gew.-%, vorzugsweise von 5 bis 50 Gew.-%, besonders bevorzugt von 10 bis 40 Gew.-%, bezogen auf das Gesamtgewicht der Dispersion, liegt.

**8.** Dispersion nach einem der vorstehenden Ansprüche, **dadurch gekennzeichnet, dass** das Gewichtsverhältnis des mindestens einen Butylsilans und der mindestens einen auf Silan basierenden Verbindung im Bereich von 0,1 bis 10, vorzugsweise von 0,2 bis 5, besonders bevorzugt von 0,25 bis 4, liegt.

**9.** Dispersion nach einem der vorstehenden Ansprüche, **dadurch gekennzeichnet, dass** die Menge des mindestens einen nichtionischen Emulgators im Bereich von 0,1 bis 10 Gew.-%, vorzugsweise von 0,5 bis 5 Gew.-%, besonders bevorzugt von 1,0 bis 2,0 Gew.-%, bezogen auf die Gesamtdispersion, liegt.

**10.** Dispersion nach einem der vorstehenden Ansprüche, **dadurch gekennzeichnet, dass** die Menge an Wasser im Bereich von 1 bis 60 Gew.-%, vorzugsweise von 10 bis 55 Gew.-%, besonders bevorzugt von 30 bis 50 Gew.-%, bezogen auf das Gesamtgewicht der Dispersion, liegt.

**11.** Dispersion nach einem der vorstehenden Ansprüche, **dadurch gekennzeichnet, dass** die Dispersion mindestens einen anionischen Emulgator umfasst, der vorzugsweise durch die Formel (A) dargestellt ist

$R^A$-A (E)

wobei

$R^A$ eine C8-C22-Alkylgruppe ist; und
A ausgewählt ist aus der Gruppe bestehend aus Carbonsäuregruppe, Sulfonsäuregruppe und Phosphonsäuregruppe oder einem Salz davon.

**12.** Verfahren zum Herstellen der Dispersion nach einem der Ansprüche 1 bis 11, umfassend die folgenden Verfahrensschritte

A1) Bereitstellen einer wässrigen Phase, die Wasser umfasst;
A2) Bereitstellen des mindestens einen Butylsilans und der mindestens einen auf Silan basierenden Verbindung;
A3) Mischen der wässrigen Phase und des mindestens einen Butylsilans und der mindestens einen auf Silan basierenden Verbindung; und
A4) Anwenden einer ersten Druckstufe und einer zweiten Druckstufe auf das Gemisch aus der wässrigen Phase und dem mindestens einen Butylsilan und der mindestens einen auf Silan basierenden Verbindung in einem Hochdruckhomogenisator.

**13.** Dispersion, erhalten durch das Verfahren nach Anspruch 12.

**14.** Verfahren zum Behandeln einer Oberfläche eines Substrats, umfassend die folgenden Verfahrensschritte

B1) Bereitstellen des Substrats mit der Oberfläche;
B2) Behandeln der Oberfläche des Substrats mit der Dispersion nach einem der Ansprüche 1 bis 11 oder 13; sodass eine behandelte Oberfläche erhalten wird.

**15.** Artikel, umfassend

i) ein Substrat mit mindestens einer Oberfläche, vorzugsweise ein Mineralsubstrat, wobei das Mineralsubstrat besonders bevorzugt ausgewählt ist aus der Gruppe bestehend aus Beton, Kalkstein, Sandstein, Terracotta, Marmor, Lehm, Zement, Granit, Sand, Schiefer, künstlichem Stein, Pflaster, Ton und Gemischen der Vorstehenden; und
ii) mindestens eine Schicht, erhalten durch Behandeln des Substrats mit der Dispersion nach Anspruch 1 bis 11 oder 13.

## Revendications

**1.** Dispersion pour le traitement d'une surface d'un substrat comprenant

A) au moins un butyl silane choisi dans le groupe constitué par iso-butyltrialcoxysilane et n-butyltrialcoxysilane ;
B) au moins un composé à base de silane comprenant au moins deux blocs de construction représentés par la formule (P)

$$R^{p2}-\underset{(OR^{p1})_p}{\underset{|}{Si}}O_{(3-p)/2} \qquad (P)$$

dans laquelle

$R^{p1}$ est choisi dans le groupe constitué par hydrogène, un groupe alkyle et un groupe aryle,
$R^{p2}$ est choisi dans le groupe constitué par un groupe alkyle en C3-C18 et un groupe alcényle,
p est choisi parmi 0, 1 et 2 ; et

C) de l'eau.

**2.** Dispersion selon la revendication 1, **caractérisée en ce qu'**elle comprend :
D) au moins un émulsifiant non ionique.

**3.** Dispersion selon la revendication 2, **caractérisée en ce que** l'au moins un émulsifiant non ionique est représenté par la formule (E) :

$$R^{E1}\left[O-E\right]_n R^{E2} \qquad (E)$$

dans laquelle

$R^{E1}$ est un groupe alkyle en C8-C22 ;
$R^{E2}$ est choisi dans le groupe constitué par hydrogène, un groupe alkyle, un groupe hydroxyle et un groupe oxyalkyle ;
chaque E est indépendamment un groupe alcanediyle ; et n est un entier dans la plage de 1 à 100.

**4.** Dispersion selon l'une quelconque des revendications précédentes, **caractérisée en ce que** l'au moins un composé à base de silane comprend 2 à 40, de préférence 2 à 20, plus préférablement 2 à 8, blocs de construction selon la formule (P).

**5.** Dispersion selon l'une quelconque des revendications précédentes, **caractérisée en ce que** le butylsilane est un iso-butyltrialcoxysilane, de préférence l'iso-butyltriéthoxysilane.

**6.** Dispersion selon l'une quelconque des revendications précédentes, **caractérisée en ce que** la quantité de l'au moins un composé à base de silane est dans la plage de 1 à 60 % en poids, de préférence de 5 à 50 % en poids, plus préférablement de 10 à 40 % en poids, par rapport au poids total de la dispersion.

**7.** Dispersion selon l'une quelconque des revendications précédentes, **caractérisée en ce que** la quantité de l'au moins un butyl silane est dans la plage de 1 à 60 % en poids, de préférence de 5 à 50 % en poids, plus préférablement de 10 à 40 % en poids, par rapport au poids total de la dispersion.

**8.** Dispersion selon l'une quelconque des revendications précédentes, **caractérisée en ce que** le rapport pondéral de l'au moins un butyl silane et de l'au moins un composé à base de silane est dans la plage de 0,1 à 10, de préférence de 0,2 à 5, plus préférablement de 0,25 à 4.

**9.** Dispersion selon l'une quelconque des revendications précédentes, **caractérisée en ce que** la quantité de l'au moins un émulsifiant non ionique est dans la plage de 0,1 à 10 % en poids, de préférence de 0,5 à 5 % en poids, plus préférablement de 1,0 à 2,0 % en poids, par rapport à la dispersion totale.

**10.** Dispersion selon l'une quelconque des revendications précédentes, **caractérisée en ce que** la quantité d'eau est dans la plage de 1 à 60 % en poids, de préférence de 10 à 55 % en poids, plus préférablement de 30 à 50 % en poids, par rapport au poids total de la dispersion.

**11.** Dispersion selon l'une quelconque des revendications précédentes, **caractérisée en ce que** la dispersion comprend au moins un émulsifiant anionique, représenté de préférence par la formule (A)

$$R^A\text{-}A \qquad (E)$$

dans laquelle

$R^A$ est un groupe alkyle en C8-C22 ; et
A est choisi dans le groupe constitué par un groupe acide carboxylique, un groupe acide sulfonique et un groupe acide phos-phonique ou un sel de ceux-ci.

**12.** Procédé de préparation de la dispersion selon l'une quelconque des revendications 1 à 11, comprenant les étapes de procédé

A1) fourniture d'une phase aqueuse comprenant de l'eau ;
A2) fourniture de l'au moins un butyl silane et de l'au moins un composé à base de silane ;
A3) mélange de la phase aqueuse et de l'au moins un butyl silane et de l'au moins un composé à base de silane ; et
A4) application d'un premier étage de pression et d'un deuxième étage de pression sur le mélange de la phase aqueuse et de l'au moins un butyl silane et de l'au moins un composé à base de silane dans un homogénéisateur à haute pression.

**13.** Dispersion obtenue par le procédé selon la revendication 12.

**14.** Procédé de traitement d'une surface d'un substrat comprenant les étapes de procédé

B1) fourniture du substrat ayant la surface ;
B2) traitement de la surface du substrat avec la dispersion selon les revendications 1 à 11 ou 13 ;
de telle sorte qu'une surface traitée soit obtenue.

**15.** Article comprenant

i) un substrat ayant au moins une surface, de préférence un substrat minéral, plus préférablement le substrat minéral étant choisi dans le groupe constitué par le béton, le calcaire, le grès, la terre cuite, le marbre, le terreau, le ciment, le granite, le sable, le schiste, la pierre artificielle, le plâtre, l'argile et des mélanges des substrats mentionnés précédemment ; et
ii) au moins une couche obtenue par traitement du substrat avec la dispersion selon les revendications 1 à 11 ou 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5225510 A
- EP 3072858 A
- WO 2006081891 A1
- WO 2006081892 A1
- CN 107556050
- WO 2008134243 A1
- US 20020090316 A1


### Non-patent literature cited in the description


- **ANDRE STRIEGEL et al.** Modern Size-Exclusion Liquid Chromatography. Wiley & Sons, 2009